# FASCICULE DE BREVET EUROPEEN

(11) **EP 0 992 397 B1**
(45) Date de publication et mention de la délivrance du brevet: **24.10.2007**
(21) Numéro de dépôt: 99402349.7
(22) Date de dépôt: 27.09.1999
(51) Int. Cl.: B60Q 1/076, G05B 19/23, H02P 8/20

(54) **Dispositif de commande d'un moteur électrique pas à pas de vehicule**
Vorrichtung zur Regelung eines elektrischen Schrittmotors in einem Fahrzeug
Controlling device for an electric step motor in an vehicle

(30) Priorité: 06.10.1998 FR 9812493
(43) Date de publication de la demande: 12.04.2000
(73) Titulaire: VALEO VISION, 93012 Bobigny Cédex (FR)
(72) Inventeur: Boilot, Virginie, 91310 Linas (FR); Cara, Hervé, 91330 Yerres (FR); Monchy, Etienne, 95150 Taverny (FR)
(74) Mandataire: Lemaire, Marc

(56) Documents cités:
- EP-A- 0 698 527
- EP-A- 0 850 802
- DE-A- 19 723 933
- FR-A- 2 755 320

## Description

La présente invention est relative à la commande des moteurs électriques utilisés dans les véhicules, notamment automobiles, et plus particulièrement la commande des moteurs électriques pas à pas sur lesquels sont intégrés les circuits d'attaque qui commandent leurs bobinages.

L'invention trouve notamment avantageusement application pour la commande de moteurs pas à pas du type de ceux utilisés pour la correction automatique de l'orientation de projecteurs.

Dans le domaine de l'automobile, la fiabilité d'un système électrique est principalement fonction du nombre de fils et de connexions de ce système.

Généralement, l'alimentation des bobinages d'un stator de moteur électrique est commandée par un circuit d'attaque (« driver » selon la terminologie anglo-saxonne généralement utilisée par l'Homme du Métier) qui est relié à chacun desdits bobinages par l'intermédiaire de deux fils et qui reçoit lui-même des signaux de commande d'une unité de gestion distincte. Ces signaux portent d'une part une information de synchronisation permettant audit circuit d'attaque de déterminer la fréquence de rotation à imposer au moteur et d'autre part une information sur le sens de rotation dans lequel le moteur doit être entraîné.

Or, la perte d'un fil d'alimentation des bobines du stator entraîne une immobilisation du moteur et une perte de référence de sa position.

Pour limiter le nombre de fils entre les bobinages du moteur et le calculateur et ainsi augmenter la fiabilité du câblage, il est connu d'intégrer le circuit d'attaque au stator du moteur.

Le document de brevet FR-2755320 décrit une commande de moteur pas à pas qui permet de relier par un seul fil un calculateur, ou unité de gestion, et un circuit d'attaque, ou moyens de commande, porté par le stator du moteur. Le calculateur transmet au circuit d'attaque un signal à impulsions à largeur modulée (PWM ou Pulse Width Modulation selon la terminologie anglo-saxonne) convoyant une information sur une position absolue de consigne que doit atteindre le moteur.

Toutefois, avec de telles commandes de moteurs pas à pas, il y a des risques d'avoir un positionnement du moteur erroné si un problème survient dans la transmission entre le calculateur et le circuit d'attaque, ce d'autant que pour des raisons techniques et économiques, les moteurs pas à pas habituellement utilisés dans les véhicules automobiles ne sont généralement pas équipés de capteurs de recopie de position.

Or, les contraintes électriques et électromagnétiques dans un véhicule sont particulièrement sévères et imposent que le fonctionnement des systèmes de commande soit transparent aux perturbations.

Un but de l'invention est de résoudre ce problème.

Elle propose à cet effet un dispositif pour la commande de l'orientation d'un projecteur automobile, tel que défini par la revendication 1 annexée.

Ce dispositif est avantageusement complété par les différentes caractéristiques suivantes prises seules ou selon toutes leurs combinaisons possibles :
- les moyens de commande portés par le stator du moteur comportent un module de décodage qui reçoit le signal transmis par l'unité de gestion, des moyens pour le suivi de la position du moteur, un soustracteur recevant en entrée le signal en sortie du module de décodage et un signal généré par les moyens de suivi de la position du moteur, ainsi qu'un circuit d'attaque qui reçoit en entrée le signal en sortie du soustracteur et qui commande l'alimentation des bobinages du stator du moteur en fonction de ce signal ;
- le module de décodage mémorise la dernière position de consigne reçue et, lorsqu'un défaut est détecté, le module de détection de défauts commande un fonctionnement en mode dégradé dans lequel la position de consigne correspond à la dernière position mémorisée avant la détection du défaut ;
- lorsque le module de détection détecte la disparition du défaut, il commande la reprise d'un fonctionnement normal ;
- le signal transmis par l'unité de gestion est un signal numérique et le module de détection comptabilise le nombre de trames non reçues sur ce signal et détecte un défaut de transmission lorsque ce nombre devient supérieur à un seuil.

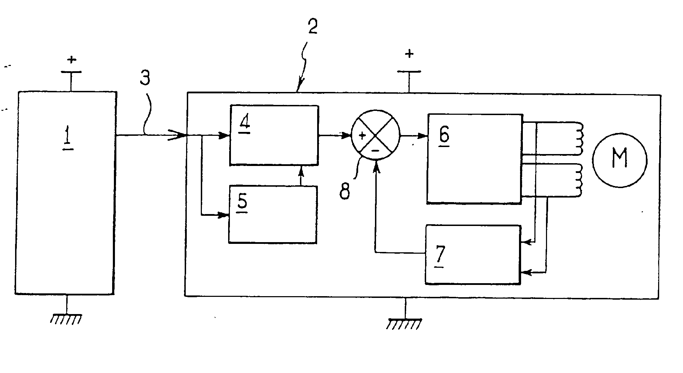

D'autres caractéristiques et avantages de l'invention ressortiront encore de la description qui suit. Cette description est purement illustrative et non limitative. Elle doit être lue en regard de la figure unique annexée sur laquelle on a représenté un mode de réalisation possible de l'invention.

Sur cette figure, on a représenté un calculateur 1, qui génère un signal qui porte des informations pour la commande d'un moteur électrique pas à pas M, ainsi qu'un ensemble 2 de modules de réception et de commande portés par le stator du moteur M. Le calculateur 1 est relié à cet ensemble 2 par l'intermédiaire d'une liaison numérique 3 unifilaire.

Le moteur M est par exemple un moteur pas à pas pour la correction automatique d'un projecteur de véhicule automobile.

Le signal délivré par le calculateur 1 est un signal de consigne qui fournit à l'ensemble 2 la position absolue que le moteur M doit atteindre.

La liaison numérique 3 est par exemple une liaison de type bus série, de type séquentielle ou encore de type PWM.

L'ensemble 2 comporte un module de décodage 4, un module de détection de défauts 5, un module 6 qui constitue le circuit d'attaque du moteur, ainsi qu'un module 7 qui est monté en sortie du module 6 et qui réalise le suivi de la position courante du moteur.

Le module 4 de décodage reçoit le signal transmis par le calculateur 1 par l'intermédiaire de la liaison numérique 3. Il décode ce signal et transmet la position absolue sur laquelle le moteur M doit être commandé sur une entrée d'un soustracteur 8.

Ce module 4 garde en mémoire la dernière position qui lui a été transmise par le calculateur 1 par l'intermédiaire de la liaison 3, de sorte qu'en cas de défaillance de ladite liaison 3, le moteur est maintenu sur la dernière valeur de consigne reçue.

Le module 5 de détection de défauts reçoit également le signal transmis par le calculateur 1 par l'intermédiaire de la liaison 3.

Il traite ce signal pour détecter d'éventuels défauts sur la liaison 3. Lorsqu'il détecte un tel défaut, il transmet au module 4 un signal qui commande audit module 4 de transmettre au soustracteur 8 la dernière position de consigne mémorisée et de ne pas modifier cette valeur de consigne tant qu'un signal de disparition de défaut ne lui est pas transmis par le module 5.

Par exemple, dans le cas d'une liaison PWM, le module 5 est avantageusement apte à détecter des défauts de type court-circuit, circuit ouvert ou surtensions.

Egalement, le module 5 peut comptabiliser le nombre de trames non reçues et déclencher un fonctionnement en mode dégradé lorsque sur une séquence donnée ce nombre de trames non reçues est supérieur à un seuil.

Ce fonctionnement en mode dégradé est réversible. En effet, lorsqu'il détecte la réapparition de trames valides, le module 5 transmet au module 4 un signal lui indiquant la disparition du défaut et l'autorisant à valider à nouveau les signaux reçus.

Outre le signal en sortie du module de décodage 4, le soustracteur 8 reçoit en entrée le signal en sortie du module de suivi de position 7. Il compare la position absolue de consigne que lui transmet le module 4 et la position courante du moteur que lui transmet le module 7 et génère un signal qui correspond à la différence de ces deux positions. Ce signal est transmis à l'entrée du module de commande 6 pour qu'il génère à son tour la commande permettant au moteur M d'atteindre la position absolue de consigne.

A cet effet, le module de commande 6 génère les courants statoriques du moteur M pas à pas à une fréquence de pilotage donnée, en fonction de la charge à entraîner. Le sens de rotation et le nombre de pas dont il fait tourner le moteur sont fonction du signe et de la valeur du signal différentiel en sortie du soustracteur 8.

Ce module 6 intègre une stratégie de régulation du taux de fonctionnement du moteur. Notamment, lorsque ce taux de fonctionnement est critique d'un point de vue thermique, le module de commande 6 réduit ou suspend le nombre de manoeuvres sur le moteur M en prenant par exemple en compte une trame sur dix du signal envoyé par la liaison 3 et décodé par le module 4.

Le module 7 comporte des moyens pour détecter les courants statoriques en sortie du module 6 et des moyens pour comptabiliser la position discrète du moteur M pas à pas en fonction des courants détectés. Ainsi, le module 7 permet de suivre en temps réel la position du moteur M. Cette position est envoyée par le module 7 en entrée du soustracteur 8, où elle est soustraite à la position de consigne transmise par le module 4.

Le moteur M est dimensionné de façon à éviter tout risque de perte de pas ou de blocage qui pourrait entraîner une perte de référence au niveau de ce module de suivi de position 7.

Ces différents modules 4 à 7 et le soustracteur 8 sont par exemple intégrés dans un micro-contrôleur, qui permet de réduire le coût de la carte électronique qui constitue l'ensemble 2. Ce micro-contrôleur est par exemple de type ASIC .

Bien entendu, d'autres fonctions que celles qui viennent d'être décrites peuvent également être rajoutées, par exemple des fonctions sécuritaires ou de diagnostic.

On notera que le dispositif est insensible aux différences de tension entre les différentes sources d'alimentation.

D'autres modes de réalisation que ceux qui viennent d'être décrits sont envisageables.

Notamment, le module de suivi de la position courante du moteur peut être remplacé par un système de recopie de la position physique de l'arbre dudit moteur.

Un tel système est toutefois plus complexe et coûteux.

Egalement, il peut être envisageable de transmettre au calculateur l'information relative à la position réelle de l'arbre du moteur telle que relevée par le système de recopie de la position physique de celui-ci.

En variante encore, il peut être envisagé que la position absolue de consigne soit fournie non pas périodiquement mais à chaque nouvelle valeur de consigne. Le calculateur 1 envoie cette position absolue de consigne codée sur la liaison unifilaire tant que l'ensemble 2 ne confirme pas qu'il a reçu la consigne. L'acquittement se fait soit par un fil supplémentaire, soit par l'intermédiaire de la liaison 3.

Dans le dernier cas, l'acquittement peut être prévu dans la trame, de sorte que le calculateur peut savoir à chaque transmission si chaque actionneur a ou non reçu et compris une nouvelle trame.

Les éléments transmis en réponse d'acquittement par les actionneurs peuvent également intégrer un message de diagnostic ou d'état de fonctionnement.

## Revendications

1. Dispositif pour la commande de l'orientation d'un projecteur automobile, comprenant un moteur électrique pas à pas et un dispositif de commande de moteur électrique pas à pas comportant des moyens de commande (2) qui sont portés par le stator dudit moteur (M) et qui alimentent le ou les bobinages dudit stator, ainsi qu'une unité de gestion (1) qui est reliée auxdits moyens de commande par une liaison unifilaire (3), cette unité de gestion (1) transmettant auxdits moyens un signal de commande par ladite liaison unifilaire (3), le signal transmis par l'unité de gestion (1) portant une information sur la position absolue de consigne que doit atteindre le moteur, **caractérisé en ce que** les moyens de commande comportent des moyens (8) pour soustraire à cette position absolue la position réelle du moteur (M) et pour commander la rotation du moteur en fonction du signal différentiel en sortie de ces moyens de soustraction (8), et **en ce que** ledit dispositif de commande de moteur électrique pas à pas comporte également un module (5) qui reçoit le signal transmis par l'unité de gestion et qui traite ce signal pour détecter des défauts que pourrait présenter la liaison unifilaire (3) afin de commander, lorsqu'un défaut est détecté, un fonctionnement du dispositif dans un mode dégradé.

2. Dispositif selon la revendication 1, **caractérisé en ce que** les moyens de commande (2) portés par le stator du moteur comportent un module de décodage (4) qui reçoit le signal transmis par l'unité de gestion (1), des moyens (7) pour le suivi de la position du moteur, un soustracteur (8) recevant en entrée le signal en sortie du module de décodage (4) et un signal généré par les moyens (7) de suivi de la position du moteur, ainsi qu'un circuit d'attaque (6) qui reçoit en entrée le signal de sortie du soustracteur (8) et qui commande l'alimentation des bobinages du stator du moteur (M) en fonction de ce signal.

3. Dispositif selon l'une des revendications précédentes, **caractérisé en ce que** le module de décodage (4) mémorise la dernière position de consigne reçue et **en ce que**, lorsqu'un défaut est détecté, le module (5) de détection de défauts commande un fonctionnement en mode dégradé dans lequel la position de consigne correspond à la dernière position mémorisée avant la détection du défaut.

4. Dispositif selon la revendication 3 **caractérisé en ce que** lorsque le module de détection (5) détecte la disparition du défaut, il commande la reprise d'un fonctionnement normal.

5. Dispositif l'une des revendications précédentes, **caractérisé en ce que** le signal transmis par l'unité de gestion (1) est un signal numérique et **en ce que** le module de détection (5) comptabilise le nombre de trames non reçues sur ce signal et détecte un défaut de transmission lorsque ce nombre devient supérieur à un seuil.

6. Dispositif selon l'une des revendications précédentes, **caractérisé en ce que** les moyens (7) de suivi de la position du moteur comportent un système de recopie de la position physique de l'arbre du moteur.

7. Dispositif selon l'une des revendications précédentes, **caractérisé en ce que** les différents éléments des moyens de commande (2) sont intégrés dans un microcontrôleur.

## Claims

1. Device for control of the orientation of a motor vehicle headlight, comprising an electric step motor and a device for control of an electric step motor, comprising control means (2) which are supported by the stator of the said motor (M) and supply the winding(s) of the said stator, as well as a control unit (1) which is connected to the said control means by a unifilar connection (3), this control unit (1) transmitting to the said means a signal for control by the said unifilar connection (3), the signal which is transmitted by the control unit (1) carrying information on the absolute set position which must be reached by the motor, **characterised in that** the control means comprise means (8) for subtracting from the absolute position the real position of the motor (M) and for controlling the rotation of the motor according to the differential signal output from these subtraction means (8), and **in that** the said control device for an electric step motor also comprises a module (5) which receives the signal transmitted by the control unit, and processes this signal in order to detect faults which could exist in the unifilar connection (3), in order, when a fault is detected, to command functioning of the device in a downgraded mode.

2. Device according to claim 1, **characterised in that** the control means (2) which are supported by the stator of the motor comprise a decoding module (4) which receives the signal transmitted by the control unit (1), means (7) for monitoring the position of the motor, a subtractor (8), which receives as input the signal output from the decoding module (4) and a signal generated by means (7) for monitoring the position of the motor, as well as a driver (6) which receives as input the output signal of the subtractor (8), and controls the supply of the windings of the stator of the motor (M) according to this signal.

3. Device according to one of the preceding claims, **characterised in that** the decoding module (4) stores the latest set position received, and **in that**, when a fault is detected, the module (5) for detection of faults commands functioning in downgraded mode, in which the set position corresponds to the latest position stored before the detection of the fault.

4. Device according to claim 3, **characterised in that**, when the detection module (5) detects the disappearance of the fault, it commands resumption of normal functioning.

5. Device according to one of the preceding claims, **characterised in that** the signal which is transmitted by the control unit (1) is a digital signal, and **in that** the detection module (5) counts the number of frames not received on this signal and detects a transmission fault when this number becomes greater than a threshold.

6. Device according to one of the preceding claims, **characterised in that** the means (7) for monitoring the position of the motor comprise a system for copying the physical position of the motor shaft.

7. Device according to one of the preceding claims, **characterised in that** the different elements of the control means (2) are integrated in a micro-controller.

## Patentansprüche

1. Vorrichtung zur Steuerung der Ausrichtung eines Kraftfahrzeugscheinwerfers, der einen elektrischen Schrittmotor und eine Steuereinrichtung des elektrischen Schrittmotors umfasst, mit Steuermitteln (2), welche vom Stator des Motors (M) getragen werden und die Wicklung bzw. Wicklungen des Stators speisen, sowie einer Steuereinheit (1), die durch eine Eindrahtverbindung (3) mit den Steuermitteln verbunden ist, wobei die Steuereinheit (1) über die Eindrahtverbindung (3) ein Steuersignal an die Mittel überträgt, wobei das durch die Steuereinheit (1) übertragene Signal eine Information über die absolute Soll-Stellung, die der Motor einnehmen soll, umfasst,
**dadurch gekennzeichnet, dass** die Steuermittel Mittel (8) umfassen, um von der absoluten Stellung die I st-Stellung des Motors (M) zu subtrahieren und um die Drehung des Motors in Abhängigkeit von dem Differentialsignal am Ausgang dieser Subtraktionsmittel (8) zu steuern, und dass die Vorrichtung zur Steuerung des elektrischen Schrittmotors auch ein Modul (5) umfasst, das das von der Steuereinheit übertragene Signal empfängt und dieses Signal verarbeitet, um Fehler zu erkennen, welche die Eindrahtverbindung (3) aufweisen könnte, um die Vorrichtung beim Erkennen eines Fehlers in einem ausfallgesicherten Modus zu betreiben.

2. Vorrichtung nach Anspruch 1,
**dadurch gekennzeichnet, dass** die vom Stator des Motors getragenen Steuermittel (2) ein Decodierungsmodul (4), welches das von der Steuereinheit (1) übertragene Signal empfängt, Mittel (7) zum Verfolgen der Motorposition, einen am Eingang das Ausgangssignal des Decodierungsmoduls (4) empfangenden Subtrahierer (8) und ein durch die Mittel (7) zum Verfolgen der Motorposition generiertes Signal sowie eine Treiberschaltung (6) umfassen, die das Ausgangssignal des Subtrahierers (8) am Eingang empfängt und die Speisung der Wicklungen des Stators des Motors (M) in Abhängigkeit von diesem Signal steuert.

3. Vorrichtung nach einem der vorhergehenden Ansprüche,
**dadurch gekennzeichnet, dass** das Decodierungsmodul (4) die letzte empfangene Soll-Stellung speichert und dass das Fehlererkennungsmodul (5) nach Erkennen eines Fehlers einen Betrieb im ausfallgesicherten Modus ansteuert, in dem die Soll-Stellung der vor Erkennen des Fehlers zuletzt gespeicherten Stellung entspricht.

4. Vorrichtung nach Anspruch 3,
**dadurch gekennzeichnet, dass** das Erkennungsmodul (5), wenn es das Verschwinden des Fehlers feststellt, die Rückkehr in den Normalbetrieb ansteuert.

5. Vorrichtung nach einem der vorhergehenden Ansprüche,
**dadurch gekennzeichnet, dass** das von der Steuereinheit (1) übertragene Signal ein digitales Signal ist, und dass das Erkennungsmodul (5) die Zahl der nicht auf diesem Signal empfangenen Datenübertragungsblöcke erfasst und einen Übertragungsfehler erkennt, wenn diese Zahl einen Schwellenwert übersteigt.

6. Vorrichtung nach einem der vorhergehenden Ansprüche,
**dadurch gekennzeichnet, dass** die Mittel (7) zum Verfolgen der Motorposition ein System zur Wiedergabe der physischen Stellung der Motorwelle umfassen.

7. Vorrichtung nach einem der vorhergehenden Ansprüche,
**dadurch gekennzeichnet, dass** die einzelnen Elemente der Steuermittel (2) in einem Mikrocontroller integriert sind.
